# EUROPÄISCHE PATENTSCHRIFT

(11) **EP 2 564 086 B1**
(45) Veröffentlichungstag und Bekanntmachung des Hinweises auf die Patenterteilung: **18.02.2015**
(21) Anmeldenummer: 11716510.0
(22) Anmeldetag: 19.04.2011
(51) Int. Cl.: F16F 1/38

(54) **ELASTISCHE LAGERBUCHSENANORDNUNG, ELASTISCHES LAGER UND VERFAHREN ZUR HERSTELLUNG DER ELASTISCHEN LAGERBUCHSENANORDNUNG**
ELASTIC BEARING BUSH ARRANGEMENT, ELASTIC BEARING, AND METHOD FOR PRODUCING THE ELASTIC BEARING BUSH ARRANGEMENT
SYSTÈME DE COUSSINET ÉLASTIQUE, COUSSINET ÉLASTIQUE ET PROCÉDÉ DE FABRICATION D'UN SYSTÈME DE COUSSINET ÉLASTIQUE

(30) Priorität: 28.04.2010 DE 102010018536
(43) Veröffentlichungstag der Anmeldung: 06.03.2013
(73) Patentinhaber: TrelleborgVibracoustic GmbH, 64293 Darmstadt (DE)
(72) Erfinder: MARX, Peter, 56412 Ruppach-Goldhausen (DE); GÜTTLER, Karsten, 56244Steinen (DE)
(74) Vertreter: Flügel Preissner Kastel Schober
(86) Internationale Anmeldenummer: PCT/EP2011/056278
(87) Internationale Veröffentlichungsnummer: WO 2011/134850

(56) Entgegenhaltungen:
- DE-A1- 3 624 280
- DE-A1-102009 034 337
- FR-A1- 2 919 906
- JP-U- H0 654 936

## Beschreibung

Die Erfindung betrifft eine elastische Lagerbuchsenanordnung für den Einbau in eine Aufnahme, insbesondere zur Verwendung in einem Fahrwerk eines Kraftfahrzeugs. Die elastische Lagerbuchsenanordnung umfasst einen inneren Kern, eine Außenhülse und einen Elastomerkörper, der den inneren Kern und die Außenhülse miteinander verbindet, wobei die Außenhülse aus Kunststoff gefertigt ist.

Eine elastische Lagerbuchsenanordnung wird in der DE 103 54 727 A1 beschrieben und umfasst ein Innenteil, ein Gehäuse und eine das Innenteil und das Gehäuse verbindende Elastomerschicht. Des Weiteren weist die Lagerbuchse zwei Halteelemente auf, die jeweils randseitig zwischen dem Gehäuse und der Elastomerschicht angeordnet sind. Die Halteelemente können mit der elastischen Zwischenschicht durch Vulkanisation verbunden sein.

Die DE 44 28 870 C1 zeigt eine elastische Lagerbuchse, die ein Innenteil, eine metallische Außenhülse und eine das Innenteil und die Außenhülse miteinander verbindende Elastomerschicht aufweist. Zwischen der Außenhülse und der Elastomerschicht ist eine Gleiteinlage eingebracht. Die Gleiteinlage bewirkt eine Relativdrehung des Außenteils gegenüber der Elastomerschicht bei einem Überschreiten eines bestimmten Drehmoments an der Außenhülse. Des Weiteren weist die Lagerbuchse jeweils einen randseitig angeordneten metallischen Stützring auf, der mit der Elastomerschicht verbunden ist. Dabei nehmen die Stützringe Axialkräfte auf und wandeln diese in Radialkräfte um.

Eine weitere elastische Lagerbuchsenanordnung wird in DE 196 27 753 C2 beschrieben und umfasst ein Innenteil, einen Elastomerkörper, der aus zwei Gummiteilen besteht. Ferner sind zwischen dem Elastomerkörper und dem Innenteil zwei Zwischenbleche angeordnet. An dem Elastomerkörper ist axial außenseitig ein Stützring anvulkanisiert.

Ferner sind auch elastische Lagerbuchsenanordnungen mit Außenhülsen aus Kunststoff bekannt wie z.B JP 6-54936, Diese Ausgestaltung bietet den Vorteil, dass die Außenhülse im Vergleich zu einer metallischen Ausgestaltung korrosionsunempfindlicher ist und sich kostengünstiger herstellen lässt. Es hat sich jedoch herausgestellt, dass die Kunststoffaußenrohre den wesentlichen Nachteil aufweisen, dass sich im Laufe der Zeit der Presssitz in der Aufnahme verringert, da der Kunststoff zum Kriechen beziehungsweise zum Setzen neigt. Dieser Nachteil tritt insbesondere dann auf, wenn die Lagerbuchsenanordnung thermischen Einflüssen, insbesondere hoher Hitze, ausgeliefert ist.

Der Erfindung liegt die Aufgabe zugrunde eine elastische Lagerbuchsenanordnung der oben genannten Art zu schaffen, die kostengünstig herzustellen ist und die die Aufrechterhaltung des Presssitzes über ihre gesamte Lebensdauer auch bei hohen thermischen Einflüssen auf einem hohen Niveau gewährleistet. Ferner soll ein elastisches Lager und ein Herstellverfahren angegeben werden.

Diese Aufgabe wird gelöst durch eine elastische Lagerbuchsenanordnung gemäß Anspruch 1, ein elastisches Lager gemäß Anspruch 8 und ein Verfahren zur Herstellung gemäß Anspruch 9. Bevorzugte Ausgestaltungen der Erfindung werden in den abhängigen Ansprüchen definiert.

Die erfindungsgemäße elastische Lagerbuchsenanordnung umfasst eine Außenhülse, die mit einem Presssitzverstärkungselement versehen ist. Das Presssitzverstärkungselement dient dazu, die Außenhülse in der Aufnahme mittels einer durch das Presssitzverstärkungselement direkt auf die Aufnahme ausgeübten Kraft zu fixieren. Durch die Kraft, die das Presssitzverstärkungselement auf die Aufnahme ausübt, wird die Auspresskraft, also die Kraft die benötigt wird um die Lagerbuchsenanordnung in Axialrichtung aus der Aufnahme zu drücken, erhöht. Die Buchse kann demnach höhere Axialkräfte und/oder oszillierende Kräfte aufnehmen, ohne aus der Aufnahme auszuwandern, und die Auspresskraft kann länger auf dem erhöhten Niveau gehalten werden.

Weiterhin wird die Auspresskrafterhöhung durch den Querschnitt des Presssitzverstärkungselement und dessen Streckgrenze beeinflusst. Ein dickerer Querschnitt kann eine höhere, durch das Presssitzverstärkungselement direkt auf die Aufnahme ausgeübte Kraft ermöglichen, und somit die Auspresskräfte in beide axiale Richtungen der Buchse erhöhen.

Das Presssitzverstärkungselement kann in bevorzugten Ausgestaltungen als Einleger oder Einsatz ausgebildet sein. Die Außenhülse mit Presssitzverstärkungselement kann zudem als Hybridaußenrohr bezeichnet werden. Bevorzugt liegt das Presssitzverstärkungselement auf der Außenseite der Außenhülse an.

Bei einer bevorzugten Ausgestaltung umfasst die Lagerbuchsenanordnung eine mit dem Presssitzverstärkungselement in Form eines offenen oder geschlossenen metallischen Einlegers oder Einsatzes versehene Kunststoffaußenhülse. Der in eine Aussparung der Außenhülse eingebrachte metallische Einleger oder Einsatz wird beim Einpressen der Buchse in die Aufnahme in Umfangsrichtung vorgespannt, wobei eine Erhöhung der Auspresskraft auftritt. Dadurch dass der Metallring eine geringere Kriechneigung als ein Kunststoffring aufweist, bleiben die Auspresskräfte über Zeit und Temperatur auf nahezu gleichem Niveau. Die Auspresskrafterhöhung kann durch den Querschnitt des Metallrings und dessen Streckgrenze beeinflusst werden. Zur Herstellung einer Außenhülse mit dem in der Aussparung eingebrachten Presssitzverstärkungselement wird das Presssitzverstärkungselement außen auf die Außenhülse vormontiert und dann die Buchse mit in der Aussparung befindlichem Presssitzverstärkungselement in die Aufnahme eingepresst.

Bei einer weiteren bevorzugten Ausgestaltung der Lagerbuchsenanordnung wird als Presssitzverstärkungselement ein metallisches Ringelement mit abragenden Krallen verwendet. Zur Herstellung der Außenhülse mit dem metallischen Ringelement wird das Ringelement in eine Werkzeugform eingelegt. Während des Schließens der Werkzeugform drückt diese die Krallen herunter, so dass die Krallen unter Vorspannung stehen. Anschließend wird der Krallring mit Kunststoff umspritzt, so dass gleichzeitig die Kunststoffaußenhülse ausgebildet wird. Danach wird die Außenhülse entformt, wobei sich die unter Vorspannung stehenden Krallen aufstellen, da der Kunststoff noch nicht vollständig erhärtet ist. Nach dem Aushärten legen sich bei der weiteren Herstellung die Krallen beim Einpressen in die Aufnahme unter einer Vorspannung flach. Im eingebauten Zustand drücken die Krallen infolge der Vorspannung auf die Innenseite der Aufnahme und üben so eine Kraft direkt auf die Innenseite der Aufnahme aus. Bei einwirkenden Auspresskräften verkrallen sich die Krallen gegen die Aufnahme, wodurch eine Erhöhung der Auspresskraft erfolgt. Diese Variante ist insbesondere für Buchsen mit Kragen geeignet, der das Auswandern in der anderen Richtung der Buchsenlängsrichtung verhindert.

Die erfindungsgemäße Buchse zeichnet sich insbesondere dadurch aus, dass es nunmehr möglich ist Kunststoffaußenhülsen in Einbaustellen mit hohen Auspresskräften und hoher thermischer Belastung zu verwenden, die bisher nur metallischen Außenhülsen vorbehalten waren. Des Weiteren zeichnet sich die erfindungsgemäße Buchse durch ihre geringen Kosten, ihre hohe Formgebungs- und Gestaltungsmöglichkeit, ihre Einengbarkeit, ihr geringes Gewicht und durch ihre Korrosionsbeständigkeit aus.

Nachfolgend werden die in den abhängigen Ansprüchen definierten bevorzugten Ausgestaltungen der Erfindung erläutert.

In einer bevorzugten Ausführungsform ist das Presssitzverstärkungselement ein Ringelement oder ein Hohlzylinderelement. Diese können weiterhin bevorzugt durchgängig oder auch offen ausgebildet sein. Ferner kann das Presssitzverstärkungselement aus einem metallischen Werkstoff gefertigt sein. Dadurch dass der Satz eines Presssitzverstärkungselements aus Metall um ein Vielfaches kleiner ist als der Satz von Kunststoff, hält das metallische Presssitzverstärkungselement die Auspresskraft über die Zeit und bei unterschiedlichen Temperaturen auf nahezu gleichem Niveau.

In einer weiteren bevorzugten Ausgestaltung kann die Außenhülse eine Aussparung zur Aufnahme des Presssitzverstärkungselements aufweisen. Diese Aussparung kann in Radialrichtung nach außen hin geöffnet sein und in Richtung Aufnahme zeigen. Die Aussparung kann in einer bevorzugten Ausführungsform im Querschnitt rechteckförmig sein. Diese Ausgestaltung bietet den Vorteil, dass die Außenhülse mit dem Presssitzverstärkungselement formschlüssig verbunden werden kann, und somit verhindert, dass die Lagerbuchse ohne Presssitzverstärkungselement aus der Aufnahme auswandern kann.

Ferner kann das Presssitzverstärkungselement einen Außendurchmesser aufweisen, der größer ist als der Innendurchmesser der Aufnahme. Dies betrifft insbesondere den Zustand vor dem Einpressen der Buchse in die Aufnahme. Dadurch wird das Presssitzverstärkungselement beim Einpressen der Buchse in die Aufnahme in Umfangsrichtung vorgespannt. Je größer dabei der Durchmesser des Presssitzverstärkungselements ist, desto stärker wird die Kraft die das Presssitzverstärkungselement direkt auf die Aufnahme ausübt. Dadurch wird der Presssitz der Buchse in der Aufnahme weiter erhöht, und eine erhöhte Auspresskraft ist nötig, um die Lagerbuchsenanordnung aus der Aufnahme zu drücken.

In einer weiteren bevorzugten Ausgestaltung weist das Presssitzverstärkungselement Krallen auf. Diese Krallen können nach außen hin abragen und sind dafür geeignet die Auspresskraft der Lagerbuchsenanordnung in wenigstens einer der beiden axialen Richtungen zu erhöhen. Diese Ausgestaltung ist im Besonderen dann sinnvoll, wenn die Buchse einen Kragen aufweist. Beim Einpressen der Lagerbuchsenanordnung in die Aufnahme legen sich die Krallen unter Vorspannung flach, so dass eine geringfügige Einpresskrafterhöhung erfolgt. Beim Auspressen erfolgt ein Formschluss, da sich die Zähne gegen die Aufnahme verkrallen und somit eine Erhöhung der Auspresskraft erfolgt.

Ferner kann das Presssitzverstärkungselement stoffschlüssig oder formschlüssig mit der Außenhülse verbunden sein. Durch den Formschluss hat die Erhöhung des Presssitzes des Presssitzverstärkungselements die Erhöhung der Auspresskraft der Lagerbuchsenanordnung zufolge. Durch den Stoffschluss können sich Presssitzverstärkungselement und Außenhülse selbst in uneingebautem Zustand nicht voneinander lösen, und dadurch eines der Bestandteile verloren gehen. Zudem kann das Presssitzverstärkungselement durch Umspritzen oder Anspritzen stoffschlüssig mit der Außenhülse verbunden sein.

Weiterhin umfasst die Erfindung ein elastisches Lager, insbesondere zur Verwendung in einem Fahrwerk eines Kraftfahrzeugs. Das elastische Lager umfasst eine Aufnahme und die erfindungsgemäße Lagerbuchsenanordnung, wobei die elastische Lagerbuchsenanordnung durch das Presssitzverstärkungselement in der Aufnahme fixiert ist. Die elastische Lagerbuchsenanordnung wird dabei mit erhöhten Auspresskräften in der Aufnahme festgehalten, wodurch die Buchse höhere Axialkräfte aufnehmen kann ohne aus der Aufnahme auszuwandern. Das elastische Lager ist darüber hinaus weniger empfindlich gegen thermische Einflüsse als herkömmliche elastische Lager mit einer Kunststoffaußenhülse.

Des Weiteren umfasst die Erfindung ein Verfahren zur Herstellung einer elastischen Lagerbuchsenanordnung. Das Herstellungsverfahren umfasst das Bereitstellen der Außenhülse aus Kunststoff und des Presssitzverstärkungselements. Die Außenhülse und das Presssitzverstärkungselement werden derart verbunden, dass das Presssitzverstärkungselement in eingebautem Zustand der Lagerbuchsenanordnung in der Aufnahme eine Kraft direkt auf die Aufnahme ausübt. Dieses Verfahren ermöglicht die Herstellung einer elastischen Lagerbuchse mit Kunststoffaußenhülse, die selbst bei erhöhter thermischer Belastung den Presssitz im Laufe der Zeit annähernd aufrechterhält.

Vorzugsweise erfolgt das Verbinden von Außenhülse und Presssitzverstärkungselement stoffschlüssig. Dadurch sind Außenhülse und Presssitzverstärkungselement bereits in uneingebautem Zustand unlösbar miteinander verbunden. Vorzugsweise erfolgt das stoffschlüssige Verbinden durch Anspritzen oder Umspritzen. In einer anderen Ausgestaltung kann das Verbinden formschlüssig und/oder kraftschlüssig erfolgen. Eine formschlüssige Verbindung ergibt sich insbesondere bei einer Ausführung des Presssitzverstärkungselements als Ringelement, Einsatz oder Einleger, wobei das Presssitzverstärkungselement in einer Aussparung der Außenhülse wenigstens teilweise aufgenommen ist. Einzelheiten und weitere Vorteile der Erfindung ergeben sich aus den nachfolgend beschriebenen bevorzugten Ausführungsbeispielen. Die in den Ausführungsbeispielen lediglich schematisch dargestellten Zeichnungen veranschaulichen im Einzelnen:
- Fig. 1: perspektivische Darstellung der Lagerbuchsenanordnung;
- Fig. 2: Längsschnitt einer in eine Aufnahme eingebaute Lagerbuchsenanordnung;
- Fig. 3: Längsschnitt einer in eine Aufnahme eingebauten Außenhülse der Lagerbuchsenanordnung mit einem Krallen aufweisenden Presssitzverstärkungselement;
- Fig. 4: weitere Ansicht der Anordnung gemäß Fig. 3;
- Fig. 5: Detailansicht, insbesondere des Presssitzverstärkungselements mit Krallen.

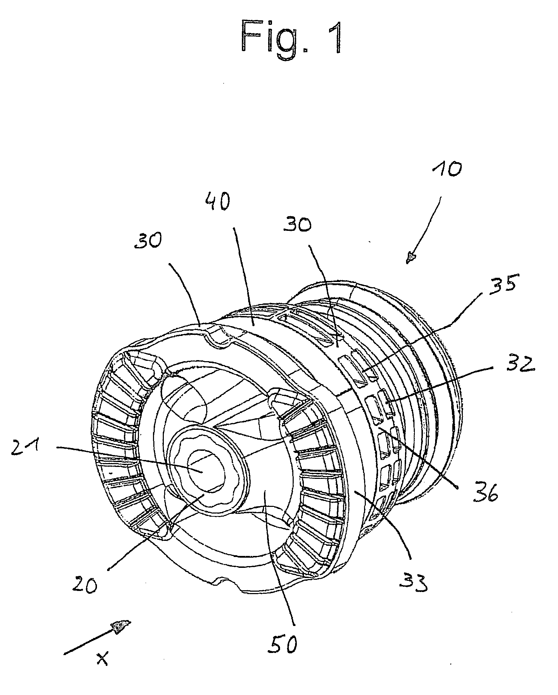

Die in Fig. 1 dargestellte elastische Lagerbuchsenanordnung 10 umfasst einen inneren Kern 20, eine Außenhülse 30 aus Kunststoff und einen Elastomerkörper 50, der den inneren Kern 20 und die Außenhülse 30 miteinander verbindet. Vorteilhafterweise ist die Elastomerschicht 50 an der Außenhülse 30 und am inneren Kern 20 anvulkanisiert.

Die Lagerbuchsenanordnung 10 erstreckt sich entlang einer Axialrichtung x, wobei der innere Kern 20, die Außenhülse 30 und das Presssitzverstärkungselement 40 koaxial angeordnet sind. Der innere Kern 20 weist eine Bohrung 21 auf, die ebenfalls in Axialrichtung x verläuft.

An der Außenseite der Außenhülse 30 ist ein ringförmiges Presssitzverstärkungselement 40 in einer Aussparung 31 angeordnet. Das Presssitzverstärkungselement 40 ist aus einem metallischen Werkstoff gefertigt und als Einsatz oder Einleger ausgebildet.

Ferner kann die Außenhülse 30 an ihrer Außenseite eine rippenartige Struktur aufweisen. Diese rippenartige Struktur dient der Aussteifung der Außenhülse 30 bei gleichzeitiger Materialersparnis, und wird durch eine Vielzahl an Öffnungen 32 gebildet. Die Öffnungen 32 werden durch Querrippen 35 und Längsrippen 36 umrissen. Durch die rippenartige Struktur entstehen gleichmäßig dünne Wandstärken, die es ermöglichen die Taktzeiten im Herstellungsprozess klein zu halten. Weiterhin kann durch diese Ausgestaltung Lunkern und anderen unerwünschten Hohlräumen vorgebeugt werden. Zudem kann die Gefahr eines Verzuges in der Außenhülse verringert werden. Bevorzugterweise ist die Außenhülse 30 mit einem Kragen 33 versehen, der eine Anliegefläche 34 aufweist. Die Anliegefläche 34 ist dafür geeignet, an einer Stützfläche 61 der Aufnahme 60 anzuliegen.

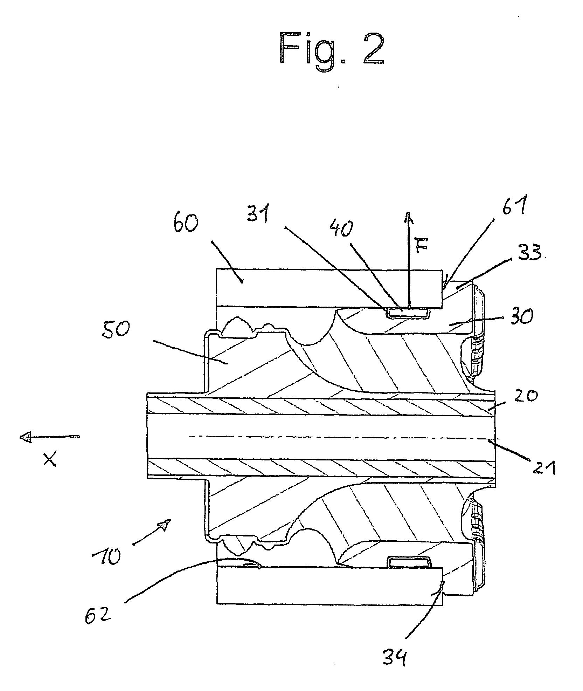

Fig. 2 zeigt einen Längsschnitt der Lagerbuchsenanordnung 10 gemäß Fig. 1, die in eine Aufnahme 60 eingebaut ist. Die Aufnahme 60 verfügt über eine Innenfläche 62. Die Außenhülse 30 weist die Aussparung 31 auf, die zur Aufnahme 60 hin offen gestaltet ist. Das Presssitzverstärkungselement 40 ist in der Aussparung 31 aufgenommen. Zur Anordnung der Außenhülse 30 mit dem in der Aussparung 31 eingebrachten Presssitzverstärkungselement 40 wird das Presssitzverstärkungselement 40 außen auf die Außenhülse 30 vormontiert und dann die Lagerbuchsenabordnung mit in der Aussparung 31 befindlichem Presssitzverstärkungselement 40 in die Aufnahme 60 eingepresst. Nach dem Einpressen liegt das Presssitzverstärkungselement 40 an der Aufnahme 60 an und übt eine Kraft F in Radialrichtung auf die Aufnahme 60 aus. Vorzugsweise weist die Aussparung 31 einen Querschnitt auf, der annähernd rechteckförmig ist. In dieser Ausführungsform ist die Auspresskraft, also die Kraft die benötigt wird um die Lagerbuchsenanordnung 10 in Axialrichtung x aus der Aufnahme 60 zu drücken, erhöht. Der Kragen 33 der Außenhülse 30 verfügt über einen Durchmesser, der größer ist als der Innendurchmesser der Aufnahme 60, und bildet eine Anliegefläche 34, die an der Stützfläche 61 der Aufnahme 60 anliegt. Dadurch dass die Auspresskraft in beide Richtungen erhöht ist, ist diese Ausführungsform auch für eine Außenhülse 30 ohne Kragen 33 geeignet.

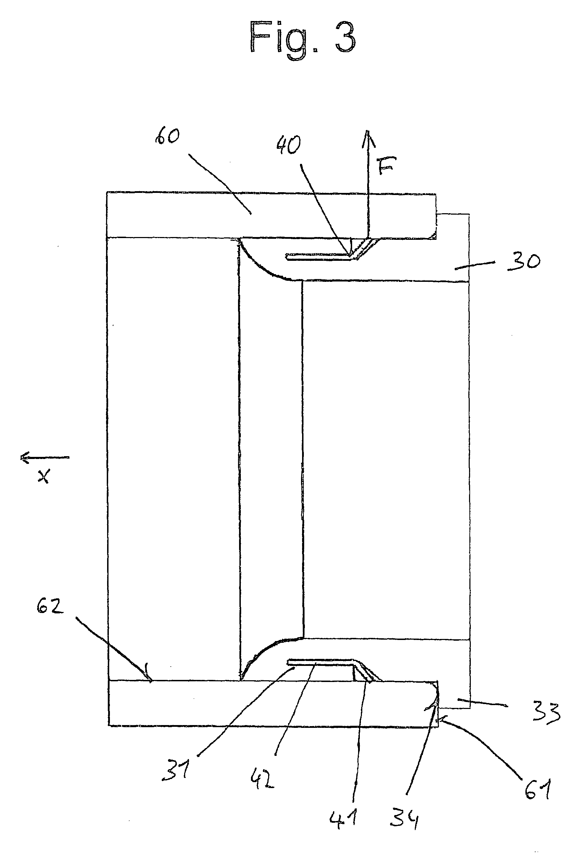

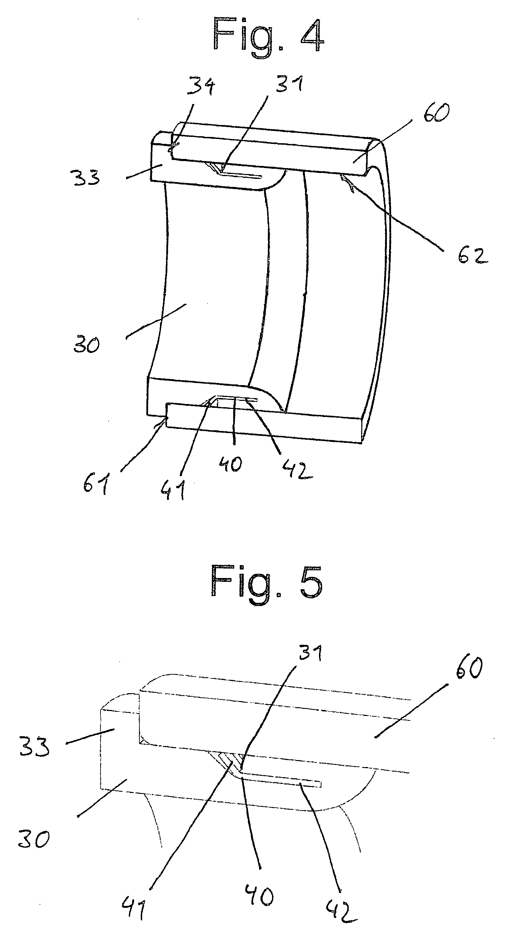

Die Fig. 3 bis 5 zeigen verschiedene Ansichten einer weiteren Ausführungsform. Um insbesondere das Presssitzverstärkungselement 40 detailliert wiedergeben zu können, wurden lediglich die Aufnahme 60, die Außenhülse 30 und das Presssitzverstärkungselement 40 dargestellt. In dieser Ausführungsform weist das Presssitzverstärkungselement 40 eine ringförmige Basis 42 und eine Vielzahl an Krallen 41 auf. Die Basis 42 ist in der Aussparung 31 der Außenhülse 30 befestigt. Entlang der Umfangsrichtung der Basis 42 ragen eine Vielzahl von in Umfangrichtung äquidistant zueinander beabstandeten Krallen 41 von der Basis 42 ab. Das Presssitzverstärkungselement 40 ist somit stoffschlüssig mit der Außenhülse 30 verbunden, wobei diese Verbindung durch Anspritzen beziehungsweise teilweises Umspritzen der Basis 42 erfolgt, wie weiter oben schon erläutert wurde. Die Krallen 41 sind in Radialrichtung nach außen in Richtung Aufnahme 60 vorgespannt. Die Krallen 41 legen sich beim Einpressen der Lagerbuchsenanordnung 10 in die Aufnahme 60 gegen ihre Vorspannung flach, um dann in eingebautem Zustand der Buchse eine Kraft F direkt auf die Aufnahme 60 auszuüben. In diesem Ausführungsbeispiel liegen also die Krallen 41 des Presssitzverstärkungselements 40 an der Innenseite 62 der Aufnahme 60 an und üben eine Kraft F in Radialrichtung auf die Aufnahme 60 aus. Falls nun eine das Auswandern der Buchse fördernde Kraft in Axialrichtung einwirken sollte, verkrallen sich die Krallen 31, wodurch die Auspresskraft erhöht wird. Alternativ können die Krallen 41 auch als Zähne, Zinken oder als Haken ausgebildet sein.

### Bezugszeichenliste

- 10: Lagerbuchsenanordnung

- 20: innerer Kern
- 21: Bohrung

- 30: Außenhülse
- 31: Aussparung
- 32: Öffnung
- 34: Anliegefläche
- 35: Querrippe
- 36: Längsrippe

- 40: Presssitzverstärkungselement
- 41: Krallen
- 42: Basis

- 50: Elastomerkörper

- 60: Aufnahme
- 61: Stützfläche
- 62: Innenfläche

- x: Achse
- F: Kraft

## Patentansprüche

1. Elastische Lagerbuchsenanordnung für den Einbau in eine Aufnahme (60), insbesondere zur Verwendung in einem Fahrwerk eines Kraftfahrzeuges, mit einem inneren Kern (20), einer Außenhülse (30) und einem Elastomerkörper (50), der den inneren Kern (20) und die Außenhülse (30) miteinander verbindet, wobei die Außenhülse (30) aus Kunststoff gefertigt ist, **dadurch gekennzeichnet, dass** die Außenhülse (30) mit einem Presssitzverstärkungselement (40) zum Fixieren der Außenhülse (30) in der Aufnahme (60) mittels einer durch das Presssitzverstärkungselement (40) direkt auf die Aufnahme (60) ausgeübten Kraft (F) versehen ist.

2. Elastische Lagerbuchsenanordnung nach Anspruch 1, **dadurch gekennzeichnet, dass** das Presssitzverstärkungselement (40) ein Ringelement oder ein Hohlzylinderelement ist, das vorzugsweise aus einem metallischen Werkstoff gefertigt ist.

3. Elastische Lagerbuchsenanordnung nach Anspruch 1 oder 2, **dadurch gekennzeichnet, dass** die Außenhülse (30) eine Aussparung (31) zur Aufnahme des Presssitzverstärkungselements (40) aufweist.

4. Elastische Lagerbuchsenanordnung nach einem der Ansprüche 1 bis 3, **dadurch gekennzeichnet, dass** das Presssitzverstärkungselement (40) einen Außendurchmesser aufweist, der größer ist als der Innendurchmesser der Aufnahme (60).

5. Elastische Lagerbuchsenanordnung nach einem der Ansprüche 1 bis 4, **dadurch gekennzeichnet, dass** das Presssitzverstärkungselement (40) Krallen (41) aufweist.

6. Elastische Lagerbuchsenanordnung nach einem der Ansprüche 1 bis 5, **dadurch gekennzeichnet, dass** das Presssitzverstärkungselement (40) stoffschlüssig oder formschlüssig mit der Außenhülse (30) verbunden ist.

7. Elastische Lagerbuchsenanordnung nach Anspruch 6, **dadurch gekennzeichnet, dass** das Presssitzverstärkungselement (40) durch Umspritzen stoffschlüssig mit der Außenhülse (30) verbunden ist.

8. Elastisches Lager, insbesondere zur Verwendung in einem Fahrwerk eines Kraftfahrzeugs, umfassend:
eine Aufnahme (60) und
eine elastische Lagerbuchsenanordnung (10) nach einem der Ansprüche 1 bis 7, wobei die elastische Lagerbuchsenanordnung (10) durch das Presssitzverstärkungselement (40) in der Aufnahme (60) fixiert ist.

9. Verfahren zur Herstellung einer elastischen Lagerbuchsenanordnung (10) nach einem der Ansprüche 1 bis 7, **gekennzeichnet durch** folgende Verfahrensschritte:
- Bereitstellen der Außenhülse (30) aus Kunststoff;
- Bereitstellen des Presssitzverstärkungselements (40);
- Verbinden von Außenhülse (30) und Presssitzverstärkungselement (40) derart, dass das Presssitzverstärkungselement (40) im eingebauten Zustand der Lagerbuchsenanordnung (10) in der Aufnahme (60) eine Kraft (F) direkt auf die Aufnahme (60) ausübt.

10. Verfahren nach Anspruch 9, **dadurch gekennzeichnet, dass** das Verbinden stoffschlüssig, vorzugsweise durch Anspritzen oder Umspritzen erfolgt.

11. Verfahren nach Anspruch 9, **dadurch gekennzeichnet, dass** das Verbinden formschlüssig und/oder kraftschlüssig erfolgt.

## Claims

1. An elastic bearing bush arrangement for installation into a receptacle (60), in particular for use in a chassis of a motor vehicle, having an inner core (20), an outer sleeve (30) and an elastomer body (50) which connects the inner core (20) and the outer sleeve (30) to one another, wherein the outer sleeve (30) is produced from plastic, **characterized in that** the outer sleeve (30) is provided with an interference fit reinforcement element (40) for fixing the outer sleeve (30) in the receptacle (60) by means of a force (F) exerted directly on the receptacle (60) by the interference fit reinforcement element (40).

2. The elastic bearing bush arrangement as claimed in claim 1, **characterized in that** the interference fit reinforcement element (40) is a ring-shaped element or a hollow cylindrical element which is produced preferably from a metallic material.

3. The elastic bearing bush arrangement as claimed in claim 1 or 2, **characterized in that** the outer sleeve (30) has a cutout (31) for receiving the interference fit reinforcement element (40).

4. The elastic bearing bush arrangement as claimed in one of claims 1 to 3, **characterized in that** the interference fit reinforcement element (40) has an outer diameter larger than the inner diameter of the receptacle (60).

5. The elastic bearing bush arrangement as claimed in one of claims 1 to 4, **characterized in that** the interference fit reinforcement element (40) has claws (41).

6. The elastic bearing bush arrangement as claimed in one of claims 1 to 5, **characterized in that** the interference fit reinforcement element (40) is connected to the outer sleeve (30) in a cohesive or positively locking manner.

7. The elastic bearing bush arrangement as claimed in claim 6, **characterized in that** the interference fit reinforcement element (40) is connected to the outer sleeve (30) in a cohesive manner by insert molding.

8. An elastic bearing, in particular for use in a chassis of a motor vehicle, comprising:
a receptacle (60) and
an elastic bearing bush arrangement (10) as claimed in one of claims 1 to 7, wherein the elastic bearing bush arrangement (10) is fixed in the receptacle (60) by the interference fit reinforcement element (40).

9. A method for producing an elastic bearing bush arrangement (10) as claimed in one of claims 1 to 7, **characterized by** the following method steps:
- providing the outer sleeve (30) composed of plastic;
- providing the interference fit reinforcement element (40);
- connecting the outer sleeve (30) and interference fit reinforcement element (40) in such a way that, in the installed state of the bearing bush arrangement (10) in the receptacle (60), the interference fit reinforcement element (40) exerts a force (F) directly on the receptacle (60).

10. The method as claimed in claim 9, **characterized in that** the connection is realized in a cohesive manner, preferably by molding-on or insert molding.

11. The method as claimed in claim 9, **characterized in that** the connection is realized in a positively locking and/or non-positively locking manner.

## Revendications

1. Agencement formant douille-palier élastique pour l'intégration dans un logement (60), en particulier pour l'utilisation dans un train de roulement d'un véhicule automobile, comprenant un noyau intérieur (20), un manchon extérieur (30) et un corps élastomère (50) qui relie le noyau intérieur (20) et le manchon extérieur (30) l'un à l'autre, dans lequel le manchon extérieur (30) est réalisé en matière plastique, **caractérisé en ce que** le manchon extérieur (30) est pourvu d'un élément de renforcement de montage à force (40) pour fixer le manchon extérieur (30) dans le logement (60) au moyen d'une force (F) exercée par l'élément de renforcement de montage à force (40) directement sur le logement (60).

2. Agencement formant douille-palier élastique selon la revendication 1, **caractérisé en ce que** l'élément de renforcement de montage à force (40) est un élément annulaire ou un élément cylindrique creux, qui est de préférence réalisé en un matériau métallique.

3. Agencement formant douille-palier élastique selon la revendication 1 ou 2, **caractérisé en ce que** le manchon extérieur (30) comporte un évidement (31) pour la réception de l'élément de renforcement de montage à force (40).

4. Agencement formant douille-palier élastique selon l'une des revendications 1 à 3, **caractérisé en ce que** l'élément de renforcement de montage à force (40) a un diamètre extérieur qui est plus grand que le diamètre intérieur du logement (60).

5. Agencement formant douille-palier élastique selon l'une des revendications 1 à 4, **caractérisé en ce que** l'élément de renforcement de montage à force (40) comporte des griffes (41).

6. Agencement formant douille-palier élastique selon l'une des revendications 1 à 5, **caractérisé en ce que** l'élément de renforcement de montage à force (40) est relié à coopération de matières ou à coopération de formes avec le manchon extérieur (30).

7. Agencement formant douille-palier élastique selon la revendication 6, **caractérisé en ce que** l'élément de renforcement de montage à force (40) est relié avec le manchon extérieur (30) à coopération de matières par enrobage.

8. Palier élastique, en particulier pour l'utilisation dans un train de roulement d'un véhicule automobile, comprenant :
un logement (60) et
un agencement formant douille-palier élastique (10) selon l'une des revendications 1 à 7, dans lequel l'agencement formant douille-palier élastique (10) est fixé dans le logement (60) par l'élément de renforcement de montage à force (40).

9. Procédé pour la réalisation d'un agencement formant douille-palier élastique (10) selon l'une des revendications 1 à 7, **caractérisé par** les étapes suivantes :
- on prépare le manchon extérieur (30) en matière plastique ;
- on prépare l'élément de renforcement de montage à force (40) ;
- on relie le manchon extérieur (30) et l'élément de renforcement de montage à force (40) de telle façon que, dans la situation montée de l'agencement formant douille-palier (10) dans le logement (60), l'élément de renforcement de montage à force (40) exerce une force (F) directement sur le logement (60).

10. Procédé selon la revendication 9, **caractérisé en ce que** la liaison a lieu à coopération de matières, de préférence par injection ou par enrobage.

11. Procédé selon la revendication 9, **caractérisé en ce que** la liaison a lieu à coopération de formes et/ou à coopération de forces.
